# EUROPEAN PATENT APPLICATION

(11) **EP 4 354 844 A1**
(43) Date of publication of application: **17.04.2024**
(21) Application number: 21945283.6
(22) Date of filing: 06.09.2021
(51) Int. Cl.: H04N 5/217, H04N 21/478, H04N 21/442, H04N 21/422, G06T 5/00

(54) **DISPLAY DEVICE**

(30) Priority: 08.06.2021 KR 20210074351
(71) Applicant: LG Electronics Inc., Yeongdeungpo-gu Seoul 07336 (KR)
(72) Inventor: AHN, Sungdae, Seoul 06772 (KR); PARK, Donghun, Seoul 06772 (KR)
(74) Representative: Frenkel, Matthias Alexander
(86) International application number: PCT/KR2021/012026
(87) International publication number: WO 2022/260216

(57) **Abstract**

The present disclosure discloses a display device comprising: an external device interface unit for receiving image data from an external device; a display unit for outputting the image data; and a control unit for recognizing a type of the external device by using reference information of the external device, correcting an image quality of the image data by using distance information corresponding to the type of the external device, and outputting the corrected image data.

## Description

### [TECHNICAL FIELD]

The present disclosure relates to a display device for providing a variety of content to be output.

### [BACKGROUND ART]

A display device is a device having a function of receiving, processing, and displaying an image that can be viewed by a user. A display device receives, for example, a broadcast signal selected by a user among broadcast signals transmitted from a broadcast station, separates an image signal from the received broadcast signal, and displays the separated image signal on a display.

Recently, due to the development of broadcasting technology and network technology, the functions of display devices have been diversified considerably, and the performance of display devices has been improved accordingly. That is, display devices have been developed to provide not only broadcast content but also various other content to users. For example, display devices may provide not only programs received from a broadcasting station but also game play, music listening, Internet shopping, user customized information, and the like by using various applications. In order to perform these extended functions, display devices may be basically connected to other devices or networks by using various communication protocols, and may provide ubiquitous computing environments to users. That is, display devices have evolved into smart devices that enable connectivity to a network and ubiquitous computing.

Meanwhile, as the compatibility of display devices with other electronic devices increases, video content running on smartphones, tablets, PCs, various console game devices, and set-top boxes can be provided to users in a wired or wireless manner through technologies such as miracast, smart view, and mirroring.

Through the above-mentioned method, users can view content, which has been provided on a small screen, on a large screen by using a display device.

Meanwhile, users vary their viewing distance depending on the type of electronic device connected to the display device and the type and purpose of the content being output. There has been a problem in that display devices failed to provide consistent picture quality regardless of the type of electronic device connected thereto, thus failing to provide resolution optimized for the user's viewing distance and environment.

### [DISCLOSURE OF INVENTION]

### [TECHNICAL PROBLEM]

An object of the present disclosure is to correct image data so as to be suitable for the type of external device to which a display device outputting image data of the external device is connected.

An object of the present disclosure is to adjust the sharpness of an output image according to a viewing distance of image data of an external device.

### [TECHNICAL SOLUTION]

A display device according to an embodiment of the present disclosure may include: an external device interface unit configured to receive image data from an external device; a display unit configured to output the image data; and
a control unit configured to recognize a type of the external device by using reference information of the external device, correct an image quality of the image data by using distance information corresponding to the type of the external device, and output the corrected image data.

The type of the external device may include at least one of a console device, a tablet, and a personal computer (PC).

In addition, the distance information may refer to a distance at which a user views the external device, and first distance information corresponding to the PC may have a smaller value than second distance information corresponding to the console device.

When the external device is a PC, the control unit may be configured to generate PC image data with the corrected image quality of the image data by adding a weight to a high-frequency component of the image data, and output the PC image data through the display unit.

In addition, the PC image data with the corrected image quality of the image data may be generated by using a PC look-up table having a higher gain as a frequency increases.

The PC image data may be image data with increased sharpness of a detail component of the image data.

In addition, when the external device is a console device, the control unit may be configured to generate console mage data with corrected picture quality of the image data by adding a weight to an intermediate-frequency component of the image data, and output the console image data through the display unit.

In addition, the console image data with the corrected image quality of the image data may be generated by using a console look-up table having a lower gain as a frequency increases, and the console image data maybe image data with increased sharpness of an edge component of the image data.

When a zone plate pattern displayed by overlapping a plurality of concentric circles is evaluated, aliasing in a high-frequency region, which is an outer portion of the pattern, may occur more than aliasing in a mid-frequency region, which is a central portion of the pattern.

In addition, when a zone plate pattern displayed by overlapping a plurality of concentric circles is evaluated, aliasing in a high-frequency region, which is an outer portion of the pattern, may occur less than aliasing in a mid-frequency region, which is a central portion of the pattern.

An operating method of a display device according to an embodiment of the present disclosure may include: recognizing a type of an external device by using reference information of the external device; correcting an image quality of image data received from the external device by using distance information corresponding to the type of the external device; and outputting the corrected image data.

In addition, the correcting of the image quality of the received image data may include, when the external device is a PC, generating PC image data by adding a weight to a high-frequency component of the image data.

In addition, the generating of the PC image data may include generating the PC image data with the corrected image quality of the image data by using a PC look-up table having a higher gain as a frequency increases.

The PC image data may be image data with increased sharpness of a detail component of the image data.

In addition, the correcting of the image quality of the received image data may include, when the external device is a console device, generating console image data by adding a weight to a mid-frequency component of the image data.

In addition, the generating of the console image data may include generating the console image data with the corrected image quality of the image data by using a console look-up table having a lower gain as a frequency increases.

In addition, the console image data may be image data with increased sharpness of an edge component of the image data.

### [ADVANTAGEOUS EFFECTS]

The present disclosure may provide a user with a resolution appropriate for an external device by outputting image data appropriately corrected according to a type of external device.

The present disclosure may provide image data optimized for the user's viewing distance by adjusting the sharpness of the image according to the viewing distance of the user using an external device.

### [BRIEF DESCRIPTION OF DRAWINGS]

FIG. 1 is a block diagram illustrating a configuration of a display device according to an embodiment of the present disclosure.
FIG. 2 is a block diagram illustrating a remote control device according to an embodiment of the present disclosure.
FIG. 3 is a diagram illustrating an actual configuration of a remote control device according to an embodiment of the present disclosure.
FIG. 4 shows an example of using a remote control device according to an embodiment of the present disclosure.
FIG. 5 is a diagram illustrating a usage scene to explain a viewing distance of a console device and a desktop PC according to an embodiment of the present disclosure.
FIG. 6 is a diagram illustrating an operation flowchart of a display device according to an embodiment of the present disclosure.
FIG. 7 is a diagram for explaining the technical background of image data correction corresponding to distance information according to an embodiment of the present disclosure.
FIG. 8 is a diagram illustrating a look-up table according to an embodiment of the present disclosure.
FIGS. 9 and 10 are diagrams for explaining the results of frequency weighting using a zone plate pattern according to an embodiment of the present disclosure.

### [BEST MODE FOR CARRYING OUT THE INVENTION]

Hereinafter, embodiments relating to the present disclosure will be described in detail with reference to the accompanying drawings. The suffixes "module" and "-er/or" for components used in the description below are assigned or mixed in consideration of easiness in writing the specification and do not have distinctive meanings or roles by themselves.

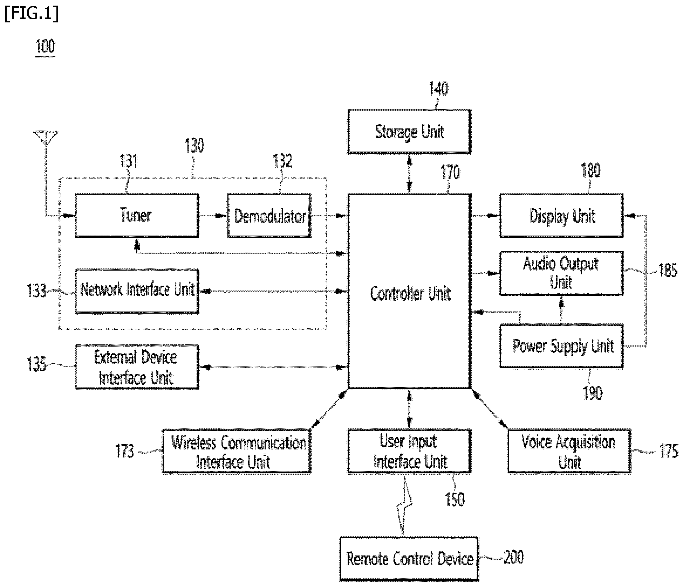

Fig. 1 is a block diagram illustrating a configuration of a display device according to an embodiment of the present disclosure.

Referring to FIG. 1, a display device 100 may include a broadcast reception module 130, an external device interface unit 135, a storage unit 140, a user input unit 150, a control unit 170, a wireless communication interface unit 173, a display unit 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The network interface 133 may provide an interface for connecting the display device 100 to a wired/wireless network comprising internet network. The network interface 133 may transmit or receive data to or from another user or another electronic device through an accessed network or another network linked to the accessed network.

The network interface unit 133 may access a predetermined webpage through an accessed network or another network linked to the accessed network. That is, the network interface unit 133 may transmit or receive data to or from a corresponding server by accessing a predetermined webpage through the network.

The network interface unit 133 may receive content or data provided from a content provider or a network operator. That is, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The external device interface unit 135 may receive an application or an application list in an adjacent external device and deliver the application or the application list to the control unit 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

Additionally, some content data stored in the display device 100 may be transmitted to a user or an electronic device, which is selected from other users or other electronic devices pre-registered in the display device 100.

The storage unit 140 may store signal-processed image, voice, or data signals stored by a program in order for each signal processing and control in the control unit 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control unit 170, or may transmit signals from the control unit 170 to a user. For example, the user input unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 may transmit, to the control unit 170, control signals input from local keys (not shown) such as a power key, a channel key, a volume key, and a setting key.

Image signals that are image-processed by the control unit 170 may be input to the display unit 180 and displayed as images corresponding to the image signals. In addition, image signals that are image-processed by the control unit 170 may be input to an external output device through the external device interface unit 135.

Voice signals processed by the control unit 170 may be output to the audio output unit 185. In addition, voice signals processed by the control unit 170 may be input to the external output device through the external device interface unit 135.

Additionally, the control unit 170 may control overall operations of the display device 100.

In addition, the control unit 170 may control the display device 100 by a user command or an internal program input through the user input unit 150, and may access the network to download a desired application or application list into the display device 100.

The control unit 170 may output channel information selected by a user together with the processed image or voice signals through the display unit 180 or the audio output unit 185.

In addition, the control unit 170 may output image signals or voice signals of an external device such as a camera or a camcorder, which are input through the external device interface unit 135, through the display unit 180 or the audio output unit 185, according to an external device image playback command received through the user input unit 150.

Moreover, the control unit 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the control unit 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100. Furthermore, if the detected wearable device is a device authenticated to communicate with the display device 100, the control unit 170 may transmit at least part of data processed in the display device 100 to the wearable device through the wireless communication unit 173. Therefore, a user of the wearable device may use the data processed by the display device 100 through the wearable device.

The voice acquisition unit 175 may acquire audio. The voice acquisition unit 175 may include at least one microphone (not shown) and may acquire audio around the display device 100 through the microphone (not shown).

The display unit 180 may convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display unit 180 and the audio output unit 185.

The audio output unit 185 receives the audio-processed signal from the control unit 170 to output an audio signal.

The power supply unit 190 supplies the corresponding power to the entire display device 100. Particularly, power may be supplied to the control unit 170 that is capable of being implemented in the form of a system on chip (SOC), the display unit 180 for displaying an image, the audio output unit 185 for outputting audio, and the like.

Specifically, the power supply unit 190 may include a converter that converts AC power to DC power and a DC/DC converter that converts a level of the DC power.

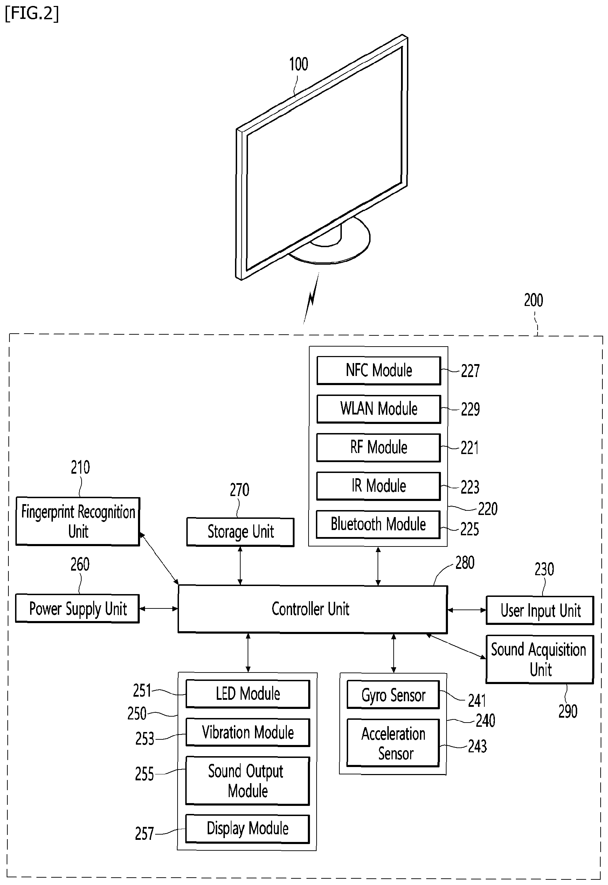

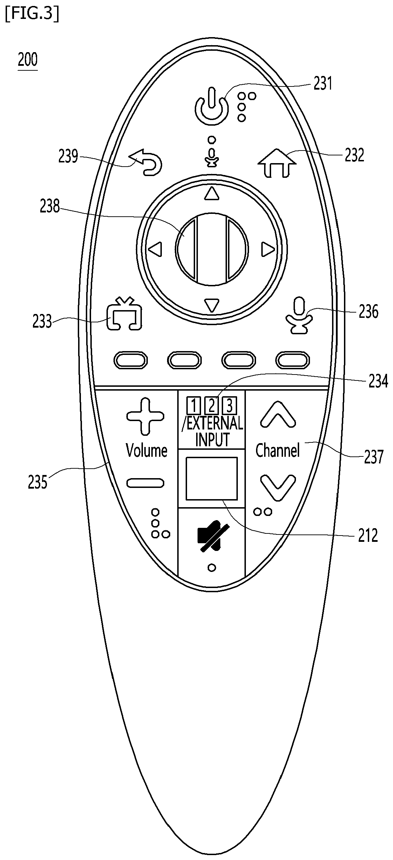

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to Fig. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation. The power button 231 may be a button for turning on/off the power of the display device 100. The home button 232 may be a button for moving to the home screen of the display device 100. The live button 233 may be a button for displaying live broadcast programs. The external input button 234 may be a button for receiving an external input connected to the display device 100. The volume control button 235 may be a button for controlling a volume output from the display device 100. The voice recognition button 236 may be a button for receiving user's voice and recognizing the received voice. The channel change button 237 may be a button for receiving broadcast signals of a specific broadcast channel. The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display unit 180 of the display device 100.

The output unit 250 may output image or voice signals in response to the operation of the user input unit 230, or may output image or voice signals corresponding to signals transmitted from the display device 100. A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced. The power supply unit 260 may resume the supply of power if a predetermined key provided at the remote control device 200 is operated.

The storage unit 270 may store various kinds of programs and application data required to control or operate the remote control device 200. If the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to the control of the remote control device 200. The control unit 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may acquire voice.

The sound acquisition unit 290 may include at least one microphone and acquire voice through the microphone.

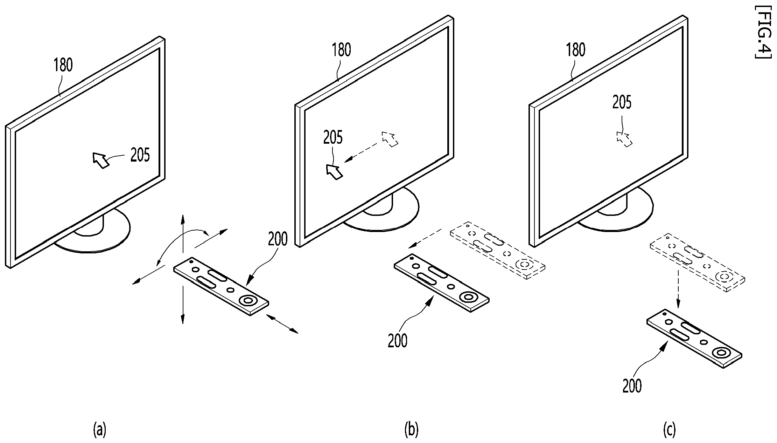

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

**A** user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display unit 180. Thus, a selected region in the display unit 180 corresponding to the pointer 205 may be zoomed in and displayed in an enlarged size.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a vertical or horizontal movement may be excluded. That is, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

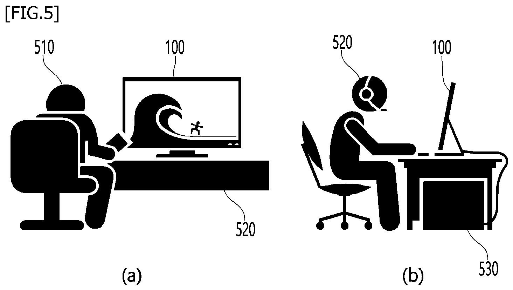

FIG. 5 is a diagram illustrating a usage scene to explain a viewing distance of a console device and a desktop PC according to an embodiment of the present disclosure.

Referring to FIGS. 5(a) and 5(b), a user can use a display device 100 by connecting the display device 100 to an external device 520.

Specifically, according to an embodiment of the present disclosure, the display device 100 may be connected to the external device in a wirelessly or wired manner. At this time, the distance between the user and the display device may vary depending on the type of external device.

For example, referring to FIG. 5(a), when the external device connected to the display device 100 is a console device 520, the user 510 can view the display device connected to the external device while sitting on a sofa or by using the remote control device 200 or a joystick at a distance from the display device.

More specifically, when the console device 520 provides a game, the user can control the external device and the display device by using a joystick while remaining a first distance (e.g., 2-3 meters) from the display device.

According to another embodiment of the present disclosure, referring to FIG. 5(b), when the external device connected to the display device 100 is a desktop PC, the user can operate a keyboard and a mouse right in front of the desktop. For example, the distance between the desktop PC and the display device and the user may be a second distance (e.g., within 1 meter).

In other words, in the usage scenario of the display device connected to the external device as described above, the viewing distance of the user may vary depending on the type of the external device. Accordingly, the optimal image quality improvement method is described below.

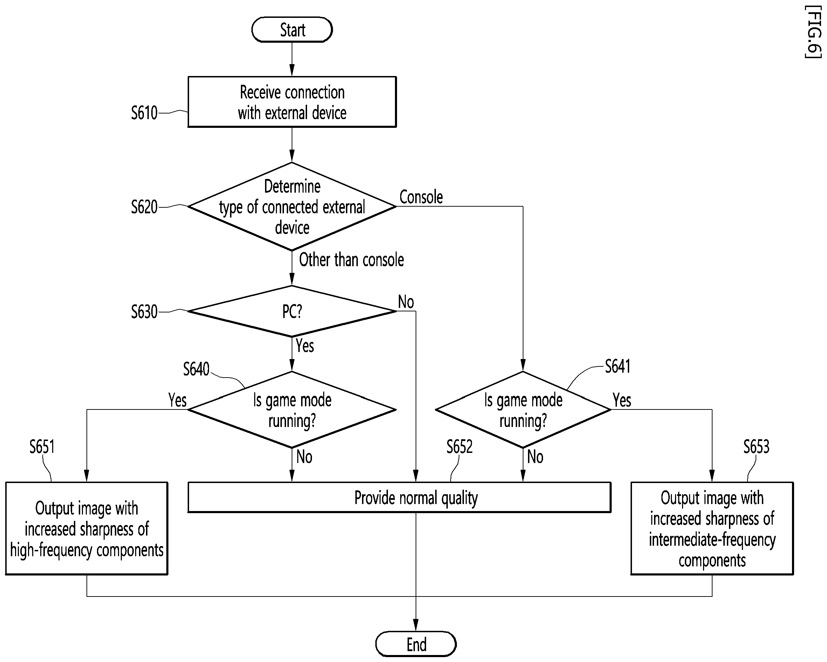

FIG. 6 is a diagram illustrating an operation flowchart of a display device according to an embodiment of the present disclosure.

Referring to FIG. 6, the external device interface unit 135 of the display device 100 may be connected to the external device and can receive image data from the external device (S610).

**At** this time, the types of the external device may include various electronic devices such as desktop PCs, console devices, DVDs, set-top boxes, mobile devices, laptops, and ultra books.

Specifically, the display device 100 and the external device may be connected to each other in a wired or wireless manner.

As described above, wired connection can be done through various cables such as high definition multimedia interface (HDMI) and digital visual interface (DVI), and wireless connection can be done by using Wi-Fi, Bluetooth, or other network communication methods.

The control unit of the display device according to an embodiment of the present disclosure may determine the type of the connected external device (S620).

After determining the type of the external device, the control unit 170 may correct the image quality of the image data by using distance information corresponding to the type of the external device and output the corrected image data.

This is described in detail below.

First, the control unit 170 of the display device according to an embodiment of the present disclosure can determine the type of the connected external device (S620).

Specifically, the control unit 170 according to an embodiment of the present disclosure can determine whether the type of connected external device is a console device.

More specifically, when the control unit 170 of the display device receives the connection with the external device, the control unit 170 can receive unique reference information of the external device and recognize the type of the external device according to the reference information of the external device.

For example, in a case where the external electronic device is a console device such as PlayStation, Xbox, Nintendo Switch, etc., when one of the above-mentioned external electronic devices is connected to the display device, the control unit 170 may receive unique reference information of the external electronic device and determine the type of the connected external electronic device.

That is, the control unit 170 can recognize the input label of the external input provided by the display device as the console game device.

**As** another example, when connected to a PC, the control unit 170 may receive reference information corresponding to the PC and recognize the input label of the external input provided by the display device as the PC.

**At** this time, the reference information corresponding to the PC may be resolution information used in the PC.

The control unit 170 according to an embodiment of the present disclosure pre-stores resolution information used in the PC in the memory, and when reference information matching the pre-stored information is received, the control unit 170 can recognize the PC connection.

Additionally, the display device will also be able to change external inputs such as HDMI to PC connection through the display unit.

After determining the type of the connected external device, the control unit 170 according to an embodiment of the present disclosure may correct the image quality of the image data by using distance information corresponding to the type of the external device.

The above-described process is described below in S630 to S650.

**At** this time, the distance information may refer to the distance at which the user normally views the display device connected to the external device, as described in FIG. 5.

For example, when the external device is a console device, first distance information corresponding to the console device may be 2-3 meters. Additionally, when the external device is a PC, second distance information corresponding to the PC may be within 1 meter.

**That** is, the first distance information corresponding to the PC may have a smaller value than the second distance information corresponding to the console device.

This is distance information derived from the fact that the PC usage distance is generally closer than the console device usage distance.

Meanwhile, specific meter information corresponding to the external device is only an example and is not limited to the above description.

When the control unit according to an embodiment of the present disclosure determines in operation S620 that the type of the connected external device is a console device, the control unit can determine whether a game mode is running on the console device (S641).

**At** this time, the game mode may refer to a mode in which the game provided by the console device is being played.

When the control unit according to an embodiment of the present disclosure determines in operation S620 that the type of the connected external device is not a console device, the control unit can determine whether the type of the connected external device is a PC (S630). At this time, when it is determined that the type of the connected external device is not a PC (S630-NO), the display device can provide image data provided by the external device at a normal resolution without correction (S652).

When the control unit according to an embodiment of the present disclosure determines that the type of the connected external device is a PC (S630-YES), the control unit can determine whether the game mode is running on the PC (S640).

When the control unit according to an embodiment of the present disclosure determines that the game mode is not running from the external device (S640-NO), the control unit may output image data received from the external device through the display unit in normal quality without correction (S652).

Hereinafter, prior to explaining a case where the game mode is running on the console device, the terms used in the specification of the present disclosure are defined as follows.

Frequencies used in the present disclosure can be divided into low-frequency components, intermediate-frequency components, and high-frequency components.

In the spatial domain of image data, the 'low-frequency' component can refer to a portion that has a little difference in color or brightness from the surrounding area, and the 'high-frequency' component can refer to a portion that has a large difference in color or brightness from the surrounding area.

Additionally, the 'mid-frequency' component can refer to a portion where the difference in color or brightness from the surrounding area is greater than the 'low-frequency' component but smaller than the 'high-frequency' component.

More specifically, the 'low-frequency' component in an image may refer to a portion (e.g., a background portion) where the edge and detail components are insignificant.

Additionally, the 'mid-frequency' component may refer to the outline or edge of an object.

Additionally, the 'high-frequency' component may refer to details such as the material and texture of an object.

Meanwhile, the high-frequency, intermediate-frequency, and low-frequency are not limited to specific ranges, and may be understood as meaning a case where the high-frequency higher than the intermediate-frequency and the low-frequency (i.e., larger difference in color or brightness from the surrounding area), and the intermediate-frequency is higher than the low-frequency.

When the control unit according to an embodiment of the present disclosure determines that the game mode is running from the external device (S640-YES), the control unit can use the image data received from the external device through the display unit to generate PC image data with increased sharpness of high-frequency components, and can output the generated PC image data (S651).

**At** this time, the PC image data may be an image with the increased sharpness of high-frequency components in image data provided by the external device, and the sharpness of detail and texture components included in the image data is increased.

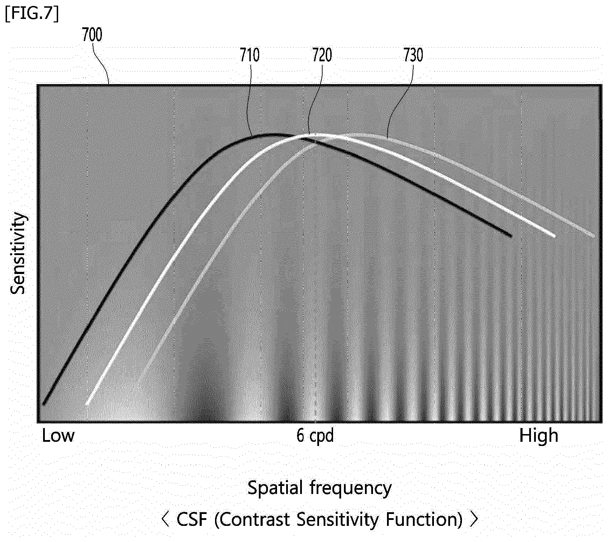

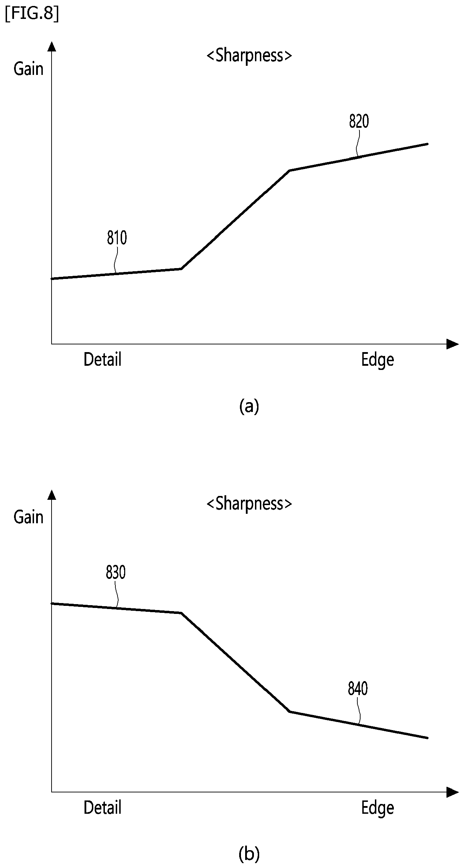

The correction process of S651 is described in detail with reference to FIGS. 7 and 8.

Meanwhile, when the game mode is not running on the console device (S641-NO), the control unit according to an embodiment of the present disclosure may output image data received from the external device through the display unit in normal quality without correction (S652).

In the present disclosure, general quality may refer to image data of a basic quality provided when the external device and the display device are connected to each other.

Additionally, when the game mode is running on the console device (S641-YES), the control unit according to an embodiment of the present disclosure may generate console mage data with the corrected picture quality of image data by adding a weight to the intermediate-frequency component of the image data, and can output the console image data through the display unit (S653).

**At** this time, the console image data may be an image with the increased sharpness of the intermediate-frequency component in the image data provided by the external device, and the sharpness of the edge component, such as the outline of the object, is increased.

The correction process of S653 is described in detail with reference to FIGS. 7 and 8.

FIG. 7 is a diagram for explaining the technical background of image data correction corresponding to distance information according to an embodiment of the present disclosure.

In the case of the console game, it is often used 2-3 meters away from the display device, and in the case of the PC game, the keyboard and mouse have to be used directly, and thus, they are sometimes used about 1 meter away.

In other words, the viewing distance environment may be different.

The control unit 170 according to an embodiment of the present disclosure may set image quality information to be provided to the user differently according to the viewing distance.

Referring to FIG. 7, a contrast sensitivity function (CSF) 700 is a graph showing sensitivity characteristics of eyes to spatial frequency.

Assuming that a user is viewing a specific display device, sensitivity to frequency may appear relatively uniform at a normal viewing distance 720, as illustrated in FIG. 7. For example, the normal viewing distance 720 may be 1.5 meters.

Meanwhile, assuming that a user is viewing a specific display device, sensitivity to low-frequency components and intermediate-frequency components may appear relatively higher at a long distance 710 than at the normal viewing distance 720, as illustrated in FIG. 7.

**That** is, in the viewing environment at the long distance 710, sensitivity to high-frequency components decreases compared to the normal viewing distance 720, and thus, sensitivity to intermediate-frequency components such as the outline (edge) of the object may increase.

Additionally, assuming that a user is viewing a specific display device, sensitivity to low-frequency components may appear relatively higher at a short distance 730 than at the normal viewing distance 720.

That is, in the viewing environment at the short distance 730, sensitivity to high-frequency components increases compared to the normal viewing distance 720, and thus, sensitivity to high-frequency components such as details and textures of image data may increase.

For example, in the case of the long distance, sensitivity to object outlines, face outlines, and jaw line components may increase.

Additionally, in the case of the short distance, sensitivity to texture, texture components, skin pores, eyebrows, hair, etc. may increase.

The look-up table of FIG. 8 can be generated based on the characteristics of the human eye as described above.

FIG. 8 is a diagram illustrating a look-up table according to an embodiment of the present disclosure.

Referring to FIG. 8(a), when the external device connected to the display device 100 is a console device, first distance information corresponding to the console device is a relatively long distance. Accordingly, the user's eyes have reduced sensitivity to high-frequency components compared to an appropriate distance, and sensitivity to intermediate-frequency components such as the edges of objects may increase.

The control unit 170 according to an embodiment of the present disclosure may generate the console image data with the corrected image quality of the image data by using a console look-up table that has a lower gain value as the frequency increases.

The control unit 170 may output the console image data through the display unit 180.

Specifically, the console look-up table shown in FIG. 8(a) may be a look-up table set to assign a lower weight to a detail component 810, which refers to a high-frequency component, than to an edge component 820.

Accordingly, console image data corrected according to the console look-up table may be image data with the increased sharpness of the edge component of the image data.

Additionally, the corrected console image data may be image data with the reduced sharpness of the detail component of the image data.

Accordingly, the user will be able to view an image with increased sharpness of intermediate-frequency components such as the edge of the object at the location of the first distance information corresponding to the console device.

Referring to FIG. 8(b), when the external device connected to the display device is a PC, second distance information corresponding to the PC may be a relatively short distance. Therefore, the user's eyes have increased sensitivity to high-frequency components compared to the appropriate distance, and accordingly, sensitivity to high-frequency components such as details and textures included in the output image may increase.

The control unit 170 according to an embodiment of the present disclosure may generate the PC image data the corrected image quality of the image data by using a PC look-up table that has a higher gain value as the frequency increases.

The control unit 170 may output the PC image data through the display unit 180.

Specifically, the PC look-up table shown in FIG. 8(b) may be a look-up table set to assign a higher weight to a detail component 830, which refers to a high-frequency component, than to an edge component 840.

Accordingly, PC image data corrected according to the PC look-up table may be image data with the increased sharpness of the detail component of the image data.

Additionally, the corrected PC image data may be image data with the reduced sharpness of the edge component of the image data.

Therefore, at the time of using a PC, the user will be able to view an image with increased sharpness of high-frequency components such as detail and texture of the image at the location of the second distance information.

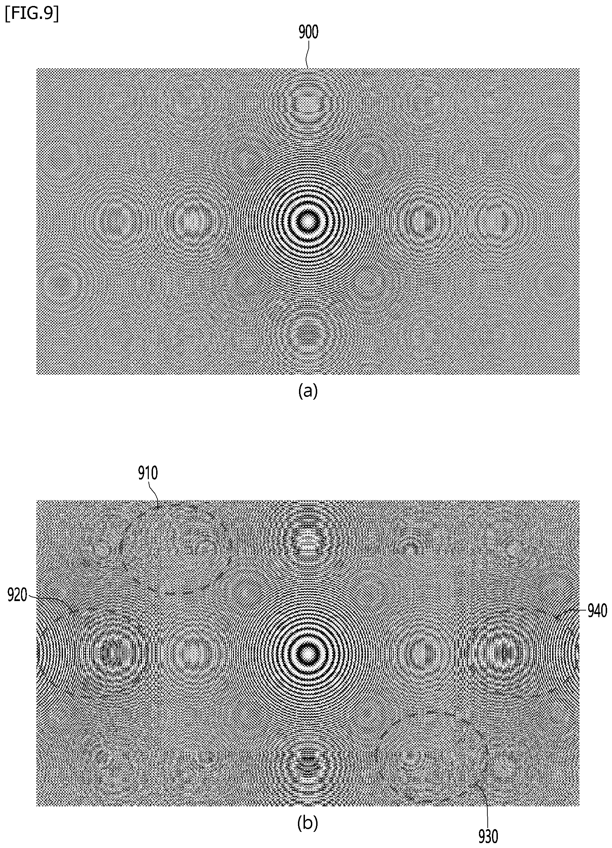

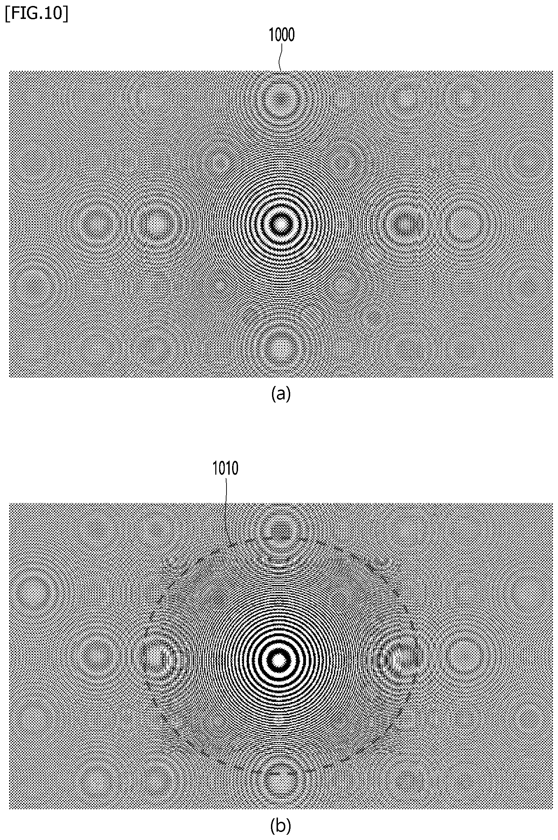

FIGS. 9 and 10 are diagrams for explaining the results of frequency weighting using a zone plate pattern according to an embodiment of the present disclosure.

First, FIG. 9 is a diagram for explaining image data corrected according to a PC look-up table when the external device according to an embodiment of the present disclosure is a PC.

Referring to FIGS. 9(a) and 10(a), normal-quality image data 900 provided to the display device by the PC shows a zone plate pattern in which a plurality of concentric circles overlap each other.

**A** plurality of concentric circles overlap each other at the central portion of the zone plate pattern 900, and thus, edge characteristics, which are intermediate-frequency components, are widely distributed. At the outer portion of the zone plate pattern 900, texture and texture data, which are high-frequency components, are expressed by a plurality of concentric circles.

The control unit according to an embodiment of the present disclosure may assign a weight to the high-frequency component by applying the PC look-up table to the zone plate pattern 900, and may generate corrected image data by assigning a relatively low weight to the intermediate-frequency component.

FIG. 9(b) shows the zone plate pattern corrected according to the PC look-up table. It can be seen that the zone plate pattern corrected according to the PC look-up table clearly shows texture and texture aliasing 910, 920, 930, and 940 due to the weight of the high-frequency region on the outer portion of the pattern.

Similarly, in the case of FIG. 10, the control unit according to an embodiment of the present disclosure may assign weights to the low-frequency and intermediate-frequency components by applying the console look-up table to a zone plate pattern 1000, and may generate corrected image data by assigning a relatively low weight to the high-frequency component.

FIG. 10(b) shows the zone plate pattern corrected according to the console look-up table. It can be seen that the zone plate pattern corrected according to the console look-up table clearly a concentric circle outline and edge component 1010 due to the weight of the intermediate-frequency region on the central portion of the pattern.

In other words, for the PC image data, when the zone plate pattern displayed by overlapping a plurality of concentric circles, aliasing in the high-frequency region, which is the outer portion of the pattern, occurs more often than in the intermediate-frequency region, which is the central portion of the pattern. For the console image data, when evaluating the zone plate pattern displayed by overlapping a plurality of concentric circles, aliasing in the high-frequency region, which is the outer portion of the pattern, occurs less than aliasing in the intermediate-frequency region, which is the central portion of the pattern.

The present disclosure may be embodied as computer-readable code on a program recording medium. The computer-readable recording medium may be any recording medium that stores computer-readable data. Examples of the computer-readable medium may include hard disk drive (HDD), solid state disk (SSD), silicon disk drive (SDD), read-only memory (ROM), random access memory (RAM), CD-ROM, magnetic tape, floppy disc, and optical data storage device. In addition, the computer may include the control unit 170 of the display device 100.

**The** above description is merely illustrative of the technical spirit of the present invention, and various modifications and changes can be made by those of ordinary skill in the art, without departing from the scope of the present invention.

Therefore, the embodiments disclosed in the present invention are not intended to limit the technical spirit of the present invention, but are intended to explain the technical spirit of the present invention. The scope of the technical spirit of the present invention is not limited by these embodiments.

The scope of the present invention should be interpreted by the appended claims, and all technical ideas within the scope equivalent thereto should be construed as falling within the scope of the present invention.

## Claims

1. A display device comprising:
an external device interface unit configured to receive image data from an external device;
a display unit configured to output the image data; and
a control unit configured to recognize a type of the external device by using reference information of the external device, correct an image quality of the image data based on a type of the external device, and output the corrected image data.

2. The display device of claim 1, wherein the control unit is configured to acquire distance information based on the type of the external device and correct the image quality of the image data according to the distance information.

3. The display device of claim 2, wherein the type of the external device includes at least one of a console device, a tablet, and a personal computer (PC).

4. The display device of claim 3, wherein the distance information refers to a distance at which a user views the external device, and
wherein first distance information corresponding to the PC has a smaller value than second distance information corresponding to the console device.

5. The display device of any one of claims 1 to 2, wherein, when the external device is a PC, the control unit is configured to generate PC image data with the corrected image quality of the image data by adding a weight to a high-frequency component of the image data, and output the PC image data through the display unit.

6. The display device of claim 5, wherein the PC image data with the corrected image quality of the image data is generated by using a PC look-up table having a higher gain as a frequency increases, and
wherein the PC image data is image data with increased sharpness of a detail component of the image data.

7. The display device of any one of claims 1 to 2, wherein, when the external device is a console device, the control unit is configured to generate console mage data with corrected picture quality of the image data by adding a weight to an intermediate-frequency component of the image data, and output the console image data through the display unit.

8. The display device of claim 7, wherein the console image data with the corrected image quality of the image data is generated by using a console look-up table having a lower gain as a frequency increases, and
wherein the console image data is image data with increased sharpness of an edge component of the image data.

9. The display device of claim 6, wherein, when a zone plate pattern displayed by overlapping a plurality of concentric circles is evaluated, aliasing in a high-frequency region, which is an outer portion of the pattern, occurs more than aliasing in an intermediate-frequency region, which is a central portion of the pattern.

10. The display device of claim 8, wherein, when a zone plate pattern displayed by overlapping a plurality of concentric circles is evaluated, aliasing in a high-frequency region, which is an outer portion of the pattern, occurs less than aliasing in an intermediate -frequency region, which is a central portion of the pattern.

11. An operating method of a display device, the operating method comprising:
recognizing a type of an external device by using reference information of the external device;
correcting an image quality of image data received from the external device by using distance information corresponding to the type of the external device; and
outputting the corrected image data.

12. The operating method of claim 11, wherein the correcting of the image quality of the received image data comprises, when the external device is a PC, generating PC image data by adding a weight to a high-frequency component of the image data.

13. The operating method of claim 12, wherein the generating of the PC image data comprises generating the PC image data with the corrected image quality of the image data by using a PC look-up table having a higher gain as a frequency increases, and
wherein the PC image data is image data with increased sharpness of a detail component of the image data.

14. The operating method of claim 11, wherein the correcting of the image quality of the received image data comprises, when the external device is a console device, generating console image data by adding a weight to an intermediate-frequency component of the image data.

15. The operating method of claim 14, wherein the generating of the console image data comprises generating the console image data with the corrected image quality of the image data by using a console look-up table having a lower gain as a frequency increases, and
wherein the console image data is image data with increased sharpness of an edge component of the image data.
